# EUROPEAN PATENT APPLICATION

(11) **EP 2 519 018 A2**
(43) Date of publication of application: **31.10.2012**
(21) Application number: 12166024.5
(22) Date of filing: 27.04.2012
(51) Int. Cl.: H04N 21/258

(54) **A television system**

(30) Priority: 30.04.2011 US 201161481153 P; 23.09.2011 US 201113244038
(71) Applicant: Samsung Electronics Co., Ltd., Suwon-si, Gyeonggi-do, 443-742 (KR)
(72) Inventor: Tran, Dang Van, Niguel, CA California 92677 (US); Zheng, Xing, Irvine, CA California 92604 (US); Khoshgozaran, Jaffar, Pasadena, CA California 91106 (US); Zhu, Yingnan, Irvine, CA California 92612 (US)
(74) Representative: Bruce, Alexander Richard Henry

(57) **Abstract**

This invention is directed to a television system that supports web-based applications. Individual users may select privacy levels for different types of confidential information, such as Internet usage, TV usage, device interactivity, or other types of information. The privacy levels may be enforced by the local media device. The user thus has control over the level of detail of different types of information that may be obtained by third parties for trend analysis and behavior analysis.

## Description

The present invention relates to consumer electronics. More specifically the present invention relates to privacy control in an advanced Internet-connected television system.

Internet-connected televisions are of increasing interest. However, prior art privacy protection schemes do not address the problems of these new internet television platforms. With the emergence of internet-connected TVs, users are able to perform activities beyond traditional and passive TV watching experience, such as accessing web-based application. In particular, they may use the new internet TV platform for consuming web-generated content/services and to interact with their social network.

In addition, the explosive growth in the popularity of sensors and their widespread use in consumer electronic devices have also created new opportunities for learning about user viewing/browsing and interaction behaviour. However, the lack of care in considering user privacy and preferences on how personal data is gathered, stored, shared, or utilized can undermine the popularity of many such services.

The present invention generally comprises an apparatus, system, method, and computer readable medium to provide user-selectable levels of privacy protection for different types of information in a media device. This may include Internet usage, TV usage, device interactivity usage, use of micro-applications, and use of individual web sites; although more generally other types of confidential information may also be protected. A user interface permits a user to select different levels of detail of confidential information and/or specific condition to make available confidential information to external web applications and/or to a service. Trend data may be generated based on privacy preserved usage/interest data. A privacy engine is associated with a media device. The privacy engine may reside on the media device or alternatively may reside remotely, such as in a cloud configuration. Because the privacy engine is directly associated with a media device, privacy protection may be enforced on behalf of the user. Additionally, the user may be provided with trend data or other benefits or information as incentives to encourage the user to select the most relaxed privacy settings that the user is comfortable with. Privacy protected information may also be used by external services for behavioural analysis, trend analysis, and targeting services to the user.

An embodiment of the present invention comprises, in a first aspect, a privacy-aware interactive television system, comprising: a shared media device for playing media including television content, the shared media device also configured to interact with one or more web-based applications; the shared media device having privacy settings controlled by a privacy engine, the privacy engine configured to receive inputs from the media device to adjust privacy settings to regulate the level of detail of confidential information available to the one or more web-based applications in communication with the media device.

An embodiment of the present invention comprises, in a second aspect, a method, comprising: receiving a privacy manifesto from a user of a television system, the privacy manifesto specifying the level of detail of at least one type of confidential information available to one or more web-based applications in communication with the television system; and protecting, in the television system, the privacy of user information available to the one or more web-based applications based on the privacy manifesto.

Various embodiments of the invention will now be described by way of example only with reference to the accompanying drawings, in which:
FIG. 1 is a diagram illustrating a media system providing user-selectable privacy preservation and trend analysis in accordance with an embodiment of the present invention.
FIG. 2 illustrates the use of micro-apps in accordance with one embodiment of the present invention.
FIG. 3 depicts an example of a privacy engine in accordance with one embodiment of the present invention.
FIG. 4 is a block diagram illustrating aspects of improved privacy services in accordance with one embodiment of the present invention.
FIG. 5A illustrates an exemplary user interface for setting all service privacy opt-ins and levels in accordance with an embodiment of the present invention.
FIG. 5B illustrates an exemplary user interface for setting TV usage privacy settings in accordance with one embodiment of the present invention.
FIG. 5C illustrates an exemplary user interface for setting Internet usage privacy settings in accordance with one embodiment of the present invention.
FIG. 6C illustrates setting of micro-app dashboards in accordance with one embodiment of the present invention.
FIG. 7 illustrates an example of privacy protected user data in accordance with one embodiment of the present invention.
FIG. 8 illustrates an example of user data with conventional privacy protection.
FIG. 9 illustrates an example of trend data generated by a media device according to privacy protection settings.
FIG. 10 is an exemplary screen shot illustrating providing a user with information on related trends within a community of television viewers.
FIG. 11 is a block diagram of exemplary hardware modules in accordance with one embodiment of the present invention.

The present invention is generally related to improving privacy in a media system used to watch television content and which also is capable of executing full web applications and micro applications. An exemplary advanced television media system describing the use of full applications and micro-applications is described in U.S. Patent Application No. 13/080,100, "Context Aware Media Interaction," which is incorporated by reference.

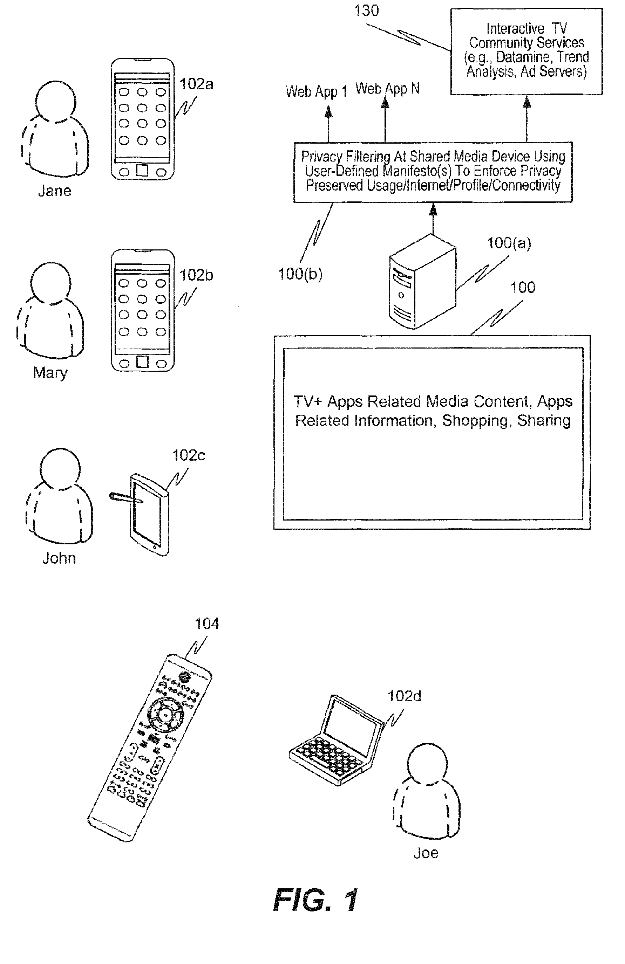

Referring to Figure 1, a television system includes a shared media device 100 that is capable of playing television content in addition to other video content. The media device 100 has the ability to communicate with the Internet to access web applications via a communication unit 100(a), such as a server, gateway or other device coupled to or contained within the shared media device 100. Additionally, media device 100 may communicate with local interaction devices, such as through a wireless WiFi connection. The media device is a shared device in that it may interact with a plurality of interaction devices 102a, 102b, 102c, and 102b, such as a smart phone, mobile device, or local computer. Additionally a remote control 104 may be provided. Thus, as illustrated in Figure 1, in a home environment a plurality of different users (e.g., Jane, Mary, John, and Joe) may access the same shared media device 100 using different respective interaction devices 102a, 102b, 102c, and 102d having different respective user profiles.

The shared media device 100 also provides privacy filtering 100(b) based on user-defined privacy manifestos. The privacy filtering provides additional layers of control over the types and levels of detail of confidential information available to web applications. Because the privacy filtering occurs locally (i.e., at the shared media device or in a device residing on the same home network as the shared media device), privacy controls can be enforced in new ways. However, the privacy-defined information may also be received by a service 130 providing community services to different television viewers. The service 130 may, for example, receive tags, metadata, or other inputs regarding content actively submitted by different viewers within a community of viewers. More generally, service 130 may also receive other types of user information such as usage behavior, static user information, device information, and context information. The service 130 may, for example, perform datamining, trend analysis and advert services based on the privacy preserved data for both basic and advanced features of the shared media device 100.

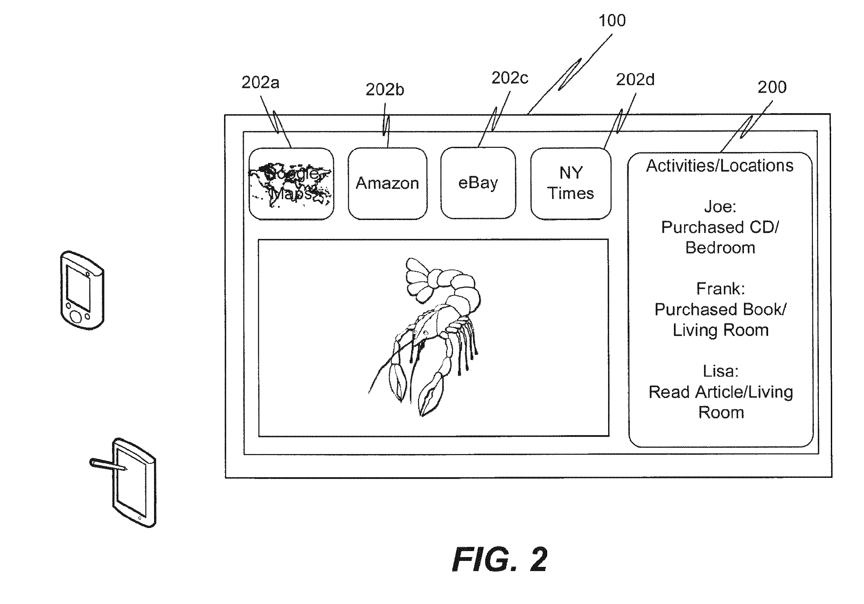

Referring to Figure 2, the shared media device 100 may include micro-applications 202(a), 202(b), 202(c), and 202(d), such as micro-applications for different information sources, e-commerce services, or other service providers. One aspect of such a system is the concept of running full web applications and also micro-applications. A "micro-app" (short for micro-application) connects to other applications or services and provides limited micro-functions with the full application or services. A micro-app resides on one or more user devices such as on the shared media device 100 and on individual interaction devices 102a, 102b, 102c, and 102d. In an augmented mode (called TV+ mode) interactions with the television may happen through individual interaction devices which may be operated by different users, such as different members of a family as one example. The users may be presented with available micro-apps on individual interaction devices and then execute a selected micro-app to receive augmented information about current media content. This causes both the shared media device and the interaction device to receive the content retrieved by the micro-app. The micro apps may be used to provide information about current media, recommendations, search results (e.g., in the form of tags), shopping services, and other information. Additional information 200 may also be generated about the use of the interaction devices, full applications, and micro-applications.

In one implementation, the micro-apps are designed to utilize context information in order to query one or more micro-app partners for result information. The context information can involve the media itself, the user, the device, or the general environment. Once this result information is received from the micro-app partner(s), it can be presented on the interaction devices. In this manner, the micro-apps provide the ability to automatically retrieve results relevant to the currently-playing media on the interactive television system and display them to viewers as the media is being played. For example, an Amazon ™ micro app may query Amazon ™ for content related to the media that is being displayed. Other examples of micro-apps include social media micro-apps (e.g. a Facebook ™ microapp), an Ebay ™ microapp, a video provider micro-app (e.g., a Netflix ™ micro-app or a Blockbuster ™ Micro-app). In these examples, the micro-app provides the ability to retrieve results relevant to what the user is doing with the television system.

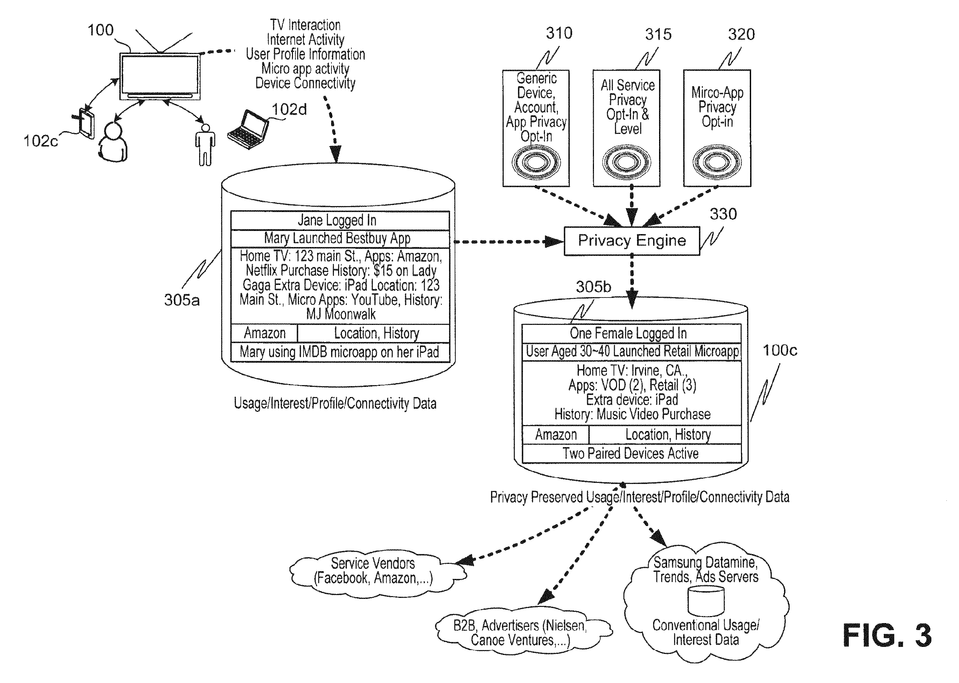

Note that the media device has the potential to collect many different types of consumer data regarding the use of full applications, micro-applications, location of users (via sensors in interaction devices, wireless location, or other conventional location techniques), and information about the devices that are being used. Referring to Figure 3, a media device 100 supporting micro-apps is part of a network in which the interaction devices are in communication with the shared media device. In many homes or other sites, there is a "communal" environment because more than one person may use the system at any one time and individual users may watch content through different interaction devices. There is thus the potential to collect and track consumer data, such as device connectivity (from one or more devices), micro-app activity (from potentially a large number of micro-apps), TV interactions, Internet Activity, and User-Profile information.

The privacy issues associated with media device 100 system are different from those experiences by individual websites. An individual website, such as Facebook™, has limited privacy settings for that single website alone. That is, an individual website has privacy settings offered at the individual application level, not at the platform level. Individual websites may also not provide any privacy protection for certain types of information. Thus, for example, even if an individual website has privacy settings, the user would have to separately set them for each and every application that they want to use and even then certain types of information might not be protected. Moreover, many websites have an all-or-nothing approach in which the user is limited to the privacy options of that particular website. In contrast, the privacy filtering of the present invention may be applied at a platform level to provide users with the ability to meaningfully make compromises regarding privacy. Moreover, the privacy filtering of the present invention may be extended to cover a broader range of information than is conventionally protected by individual websites.

In a media device 100 there is a wider variety of information that could be collected by a third party. Moreover, an individual media device 100 may be used with a variety of full applications and micro-apps. If all of the confidential information was tracked by a third party it could be used to provide users the most relevant information and advertisements related to what they are doing on the interactive television. However, if less aggregate consumer interaction data is tracked then consumer privacy is increased but the consumer may not receive the benefit of receiving relevant information and advertisements. For example, referring back to Figure 3, the potential set of consumer information might include login data (e.g., Jane logged in), the use of the internet (e.g., which applications are used, such as a Best Buy™ App), profile data (e.g., the home address of the television), the activation of micro-apps, ecommerce purchasing information (e.g., for purchasing a video on Blockbuster™), and the location and use of an interactivity device, such as an iPad™.

One aspect of the present invention is to put users in control when it comes to privacy and confidentiality and allow them to express their privacy preferences. Referring to Figure 3, a multi-function privacy engine 330 residing in media device (or locally within the same television system as the media device) permits a consumer to control privacy settings which states their desire on when, what, how to share their personal information, and who to share it with. The privacy engine 330 may reside locally to provide the consumer control over privacy settings. However, more generally it will also be understood that in an alternate embodiment that some or all of the function of the privacy engine could be offloaded to the Internet, such as in a cloud server configuration. Regardless of implementation details, the privacy engine 330 permits the user to control privacy settings at a platform level. This results in privacy filtering 100(b) of confidential information according to levels of confidential information set by the user.

The consumer may, for example, be provided with user interfaces 310, 315, and 320 to select privacy settings for different features, services, and types of consumer information. In one implementation, there are three main categories of privacy interfaces. A generic device account privacy op-in interface 310 is provided. The user is also provided with an interface 315 to opt-in and set their own privacy levels for all services (e.g., all full apps). Additionally, an interface 320 to opt-in and set privacy levels for micro-apps is provided. The cumulative set of privacy settings is a manifesto. For example, in this example, a consumer may want to protect the privacy of device connectivity (e.g., whether mobile devices are being used and the location of the mobile devices). By setting the privacy engine within an internet television system then the consumer's privacy is protected from all third parties in communication with the internet television system. Thus, service vendors, advertisers, and trend data mining services receive only that private and confidential information that the consumer wants to share with other parties. The consumer thus controls how much confidential information they are willing to expose in exchange for the potential to receive more relevant information and advertisements.

In the example of Figure 3, consider the potential confidential information 305(a) and the filtered information 305(b). The user controls the level of detail of different types of confidential information that are available to outside parties. Thus, in this example, the filtered confidential information 305(b) cloaks location information and also generalizes some of the confidential information about the user such as filtering Jane's name and purchase details into the more general information that a female logged in. Mary's purchase information using micro-apps has also been generalized to more generic information based on her privacy settings. Thus, the filtered confidential information 305(b) contains the level of detail for different attributes that each user is comfortable with. In this example, each user may independently set their privacy settings.

To make the privacy policy flexible and dynamic, well defined setting categories are provided to aid a user program a manifesto of privacy settings. In one embodiment, the privacy policy is a function of multi dimensional context, such as within a certain location, certain time, for how long, to whom, on what device and etc. However, as will be described later, the privacy policy may also have categories based on the level of detail that a user is willing to provide. Privacy preferences can also be tied to a user, time and/or device. For example, tied to a user: share this much when Mary is logged in, or time: share this much before 10pm, and/or device: do not share my iPad™ behaviour.

It is desirable to provide a motivation for users to relax their privacy setting and permit a greater degree of confidential information to be shared. In one embodiment the system provides a description of benefits a user will receive if they relax their privacy settings, such as a prediction of how much money the user can save if they share the data. Alternatively, models such as glassdoor can be used where people get a chance to "learn more" about something "after" sharing their own information which is then anonymized. In one embodiment, users can explicitly state their preferences using TV, PC or HHP. However, the TV can incrementally construct the manifesto based on user feedback on the content shown and its delivery details (e.g., from whom, what time, content type, etc.). That is, the user can initially set strict privacy policy and they adjust the settings iteratively.

In one embodiment users are provided with options to specify their privacy tolerance and preference anywhere from strict control to relaxed control. The shared media device 100 gathers usage behavior data and maps them to an existing privacy-aware interest vector. This may be done on an opt-in or opt-out basis. However, more generally different levels of control may be provided, where each level may specify a level of detail of information that the user is comfortable sharing.

Thus for a particular internet usage scenario, the mapping performed by privacy engine 330 reports different levels of detail of Internet usage. For example, with full Internet privacy no information on Internet usage is shared. A level L5 may correspond to no privacy, similar to cookies from a single advertiser or multiple advertisers. Intermediate levels of Internet privacy may specify that only usage of certain websites may be provided and/or limit the amount of additional information for usages of those Internet sites. As one example level L2 may report internet usage of shopping and media cites in a generic manners (e.g., Shopping (3), Media (5)). A level L3 may report usage of specific websites such as Amazon™ (2), You Tube™ (8), Netflix™ (6). A level L4 may report Amazon™ retails (3), Amazon™ books (2), Amazon™ apparel. In this example, the numbers in parenthesis represent a weighted parameter such as frequency of access, interest level, or the recency of access.

The privacy settings for television usage may also have multiple levels. For example, full privacy may be one setting, a level L1 specifying generic television usage, such as no TV usage, medium TV usage, heavy TV usage; a level L2 providing a greater level of detail in terms of subject matter such as: 50% reality TV, 20% finance, etc; and a level L3 providing more detailed viewing behavior, such as 2-4 PM Tuesday Jersey Shore, 5-7 PM weekends The Apprentice, volume loud. However, more generally the definition for what each privacy level represents may be varied and the total number of levels also varied.

The interactivity settings (describe use of interaction device and the shared media device) may also have multiple levels. One setting may be full privacy. A level L1 may correspond to no interactivity, low interactivity, medium, or high. A level L2 may specify usage percentage of different devices used with the interactive television system, such as personal computers and mobile devices. A level L3 may provide information on usage of specific devices, such as the type of content viewed on the television and a mobile device.

Settings may also be provided on login information and other credential information. For example, full privacy may be provided, in which no login information is available. At a first level L1, the number of people logged in (e.g., two people), and at level two the specific people logged in identified (e.g., Jane and Mary logged in): Full privacy: No login info available; L1: two people logged in; L2: Jane and Mary logged in.

In additional to level settings, other types of privacy controls may also be provided. Other example of privacy settings include user privacy preferences for controlling applications gathering user input according to their: content provider (who); content type e.g., voting, feedback, comment, tweet, etc.; (what); time of day, day of week, etc. (when); location (where), and method of gathering information.

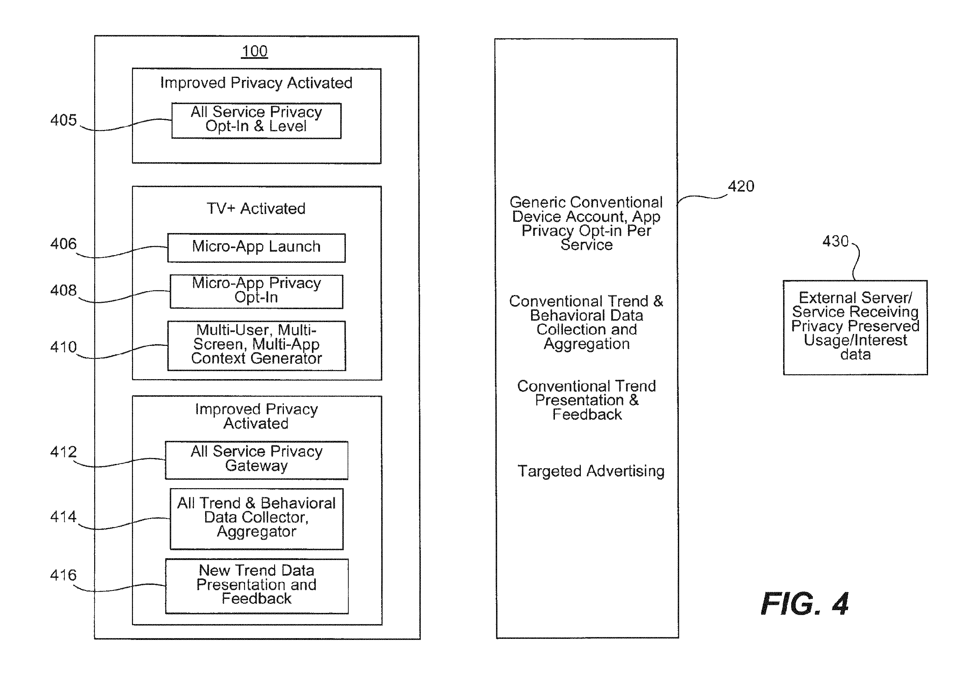

Figure 4 illustrates in more detail exemplary functional modules for improved privacy examples which may be implemented in software of firmware within the shared media device. The improved privacy controls may also be implemented by an application program within the shared media device 100 to enforce the privacy filtering. As previously described, in one implementation there is an all service opt-in and level set 405 to provide privacy filtering for all conventional full applications. If micro-apps are enabled (TV+ mode), then there may also be a launch of micro-apps 406, an opt-in and level set for the micro-apps, 408, as well as the context generation 410 for TV+ with interaction devices. An all-service privacy gateway 412 enforces privacy protection for all services. A module 414 collects privacy filtered data aggregates it, and provides this privacy protected trend information to other services for trend generation and behavioral analysis. A new trend data presentation and feedback module 416 may also be provided to provide trend data from a community of television viewers back to the user.

Note that generic conventional device privacy opt-ins per service is also an option 420. That is, the present invention may be used as an option to conventional privacy protection and/or in conjunction with conventional privacy protection. For example, a user may selectively opt-out of enhanced privacy protection for selected applications. As illustrated by block 430, one or more external services or servers may receive the privacy preserved data for use in data mining, trend analysis ad generation, or other services.

The present invention thus takes personal user, device, and usage data and transfers that data with privacy filtering based on the user manifesto. This allows the resulting privacy aware information to be used for advertising or trend purposes. Location cloaking, data suppression, data generalization, and data averaging are examples of some of the ways privacy aware information may be used for advertising or trend purposes.

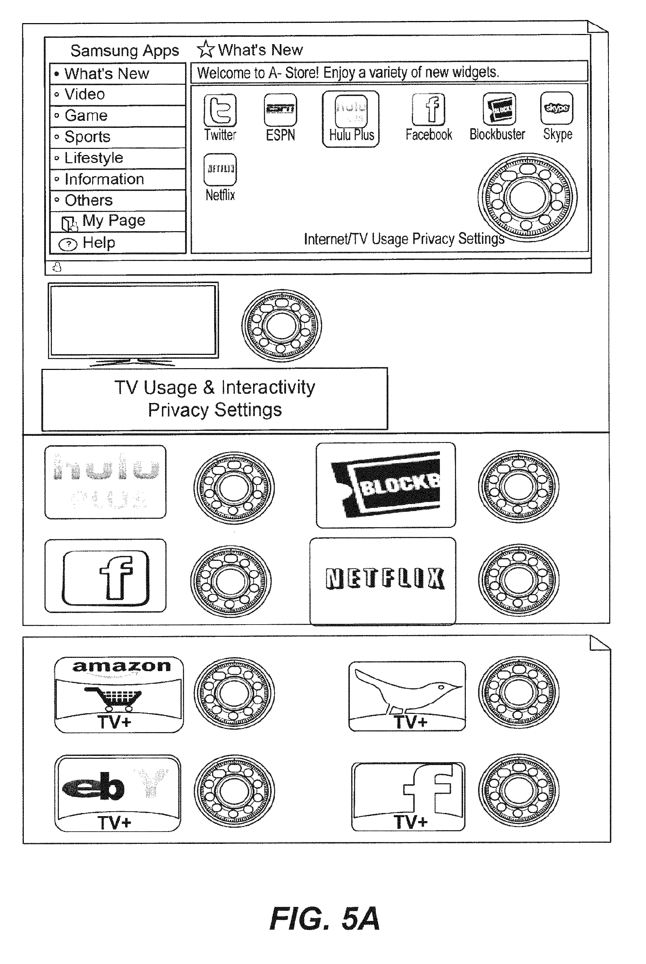

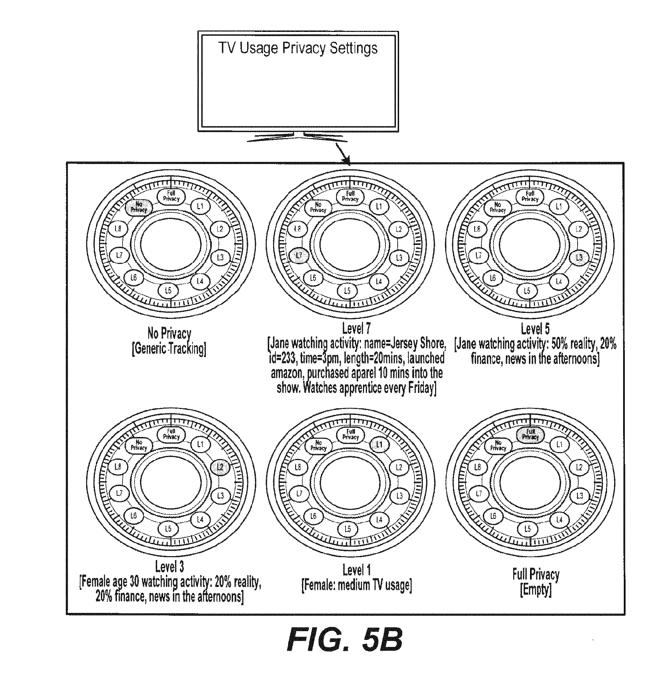

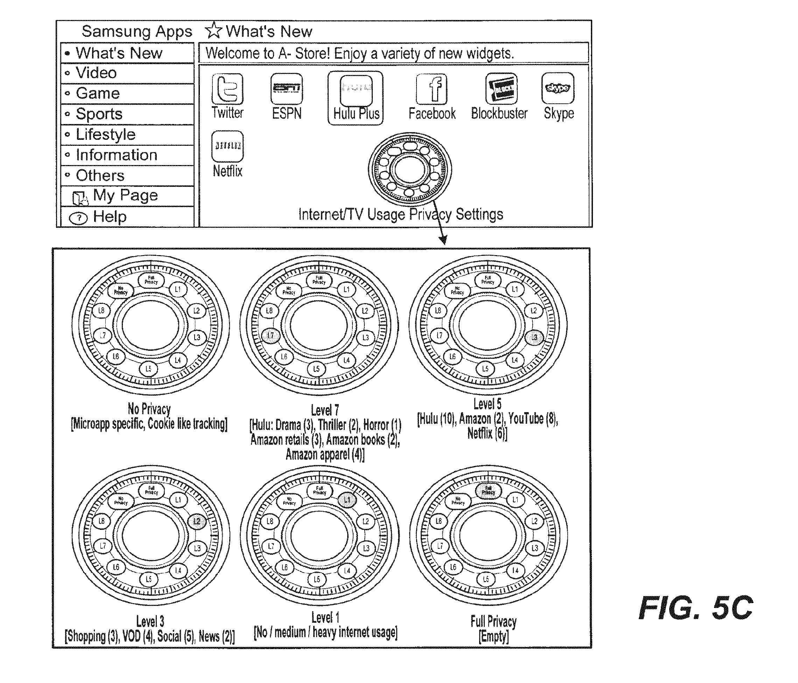

Figure 5A illustrates an exemplary user interface for all service privacy opt-in and level selection. In this example, users can select privacy levels (indicated by the dials) for individual applications and also for TV usage & interactivity and Internet usage. Figure 5B illustrates a user interface for a consumer to set TV usage privacy settings at different levels. Referring to Figure 5C, in one implementation the user is provided with a user interface to select from different levels of Internet Usage Privacy Settings. In one embodiment the user can select from eight settings in addition to no privacy and full privacy. More generally, other privacy settings may also selected using a user interface to select different levels of privacy protection.

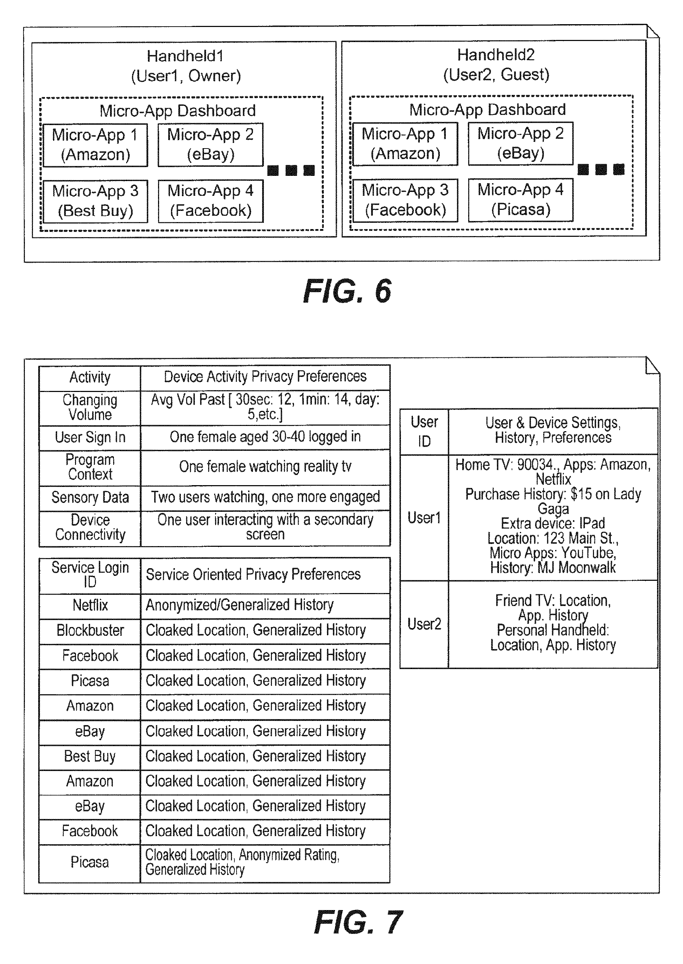

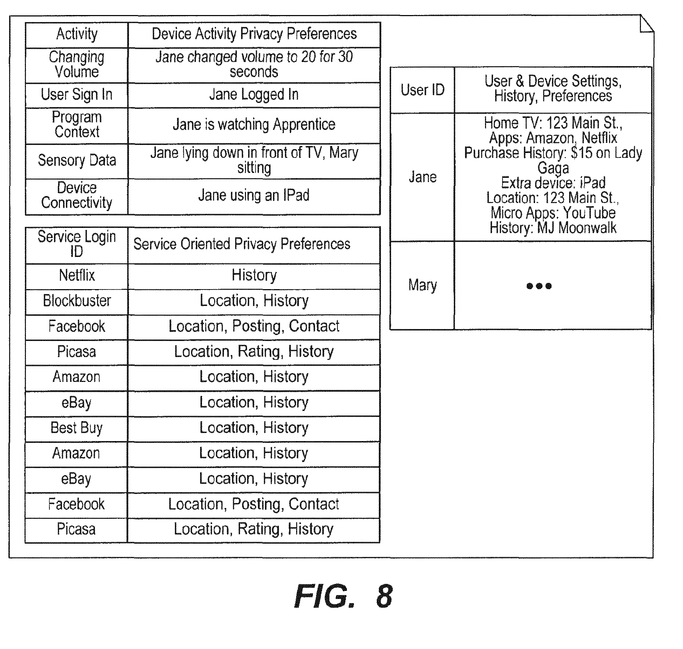

Figure 6 is a diagram illustrating the launching of micro-apps. When micro-apps are enabled (See Figure 4) corresponding micro-app dashboards are enabled on individual interaction devices. Figure 7 illustrates an example of improved privacy protected preserving trend and behavioral data. In this example, each individual user of an interaction device has set privacy settings. The privacy may, for example, cloak location, generalize certain types of information, render certain types of information anonymous (e.g., votes). In contrast, Figure 8 illustrates an example using conventional privacy protection, i.e., opting out of the enhanced privacy protection. As a result, many different types of confidential information are potentially available to external application.

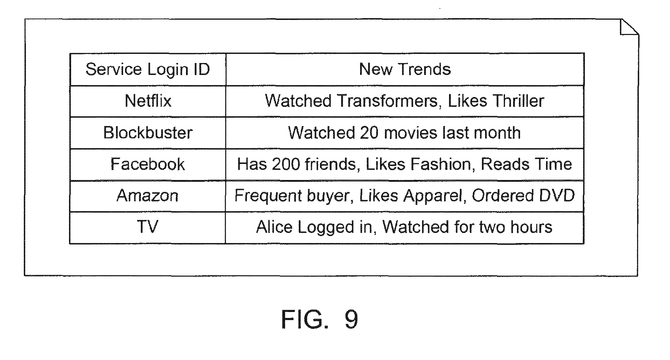

Figure 9 illustrates an example of trend data presentation and feedback generated by module 416. In this example, new trend data is generated for the user with privacy control determined by the user manifesto and/or by anonymizing/generalizing trend information.

In one embodiment, the shared media device 100 includes an application manager that ensures any application executed on the shared media device conforms to user privacy preferences stated in the privacy manifesto. The application manager monitors each application's usage of sensitive information to prevent any attempts (either unintentionally or maliciously) of violating the users' privacy preferences. In one embodiment, the application manager requires each application to conform to the user's privacy manifesto before executing.

The present invention may protect users against sensitive data that may be gathered by third party entities from the "aggregation" and "compilation" of their activities across different web-enabled and TV watching applications on TV. Users may choose from varying degrees of privacy/confidentiality: TV interactivity (how when who and how many people interact with the TV); profile information (age, sex, region, etc); Internet activity (which widgets they use and how they use it); device connectivity (what devices belonging to which users are paired to TV for what usage); and context consumption (what users watch).

The user-settable preferences alleviate user concerns when sharing their information/activity and to encourage consumers to share the above with the community. This enables the same users to benefit from various trends presented to them mainly because they have chosen to opt-in to a privacy-aware user behavioral analysis and mining system. In one embodiment as users opt-in to their privacy settings, new trends will also become available based on the level of privacy opt-ins.

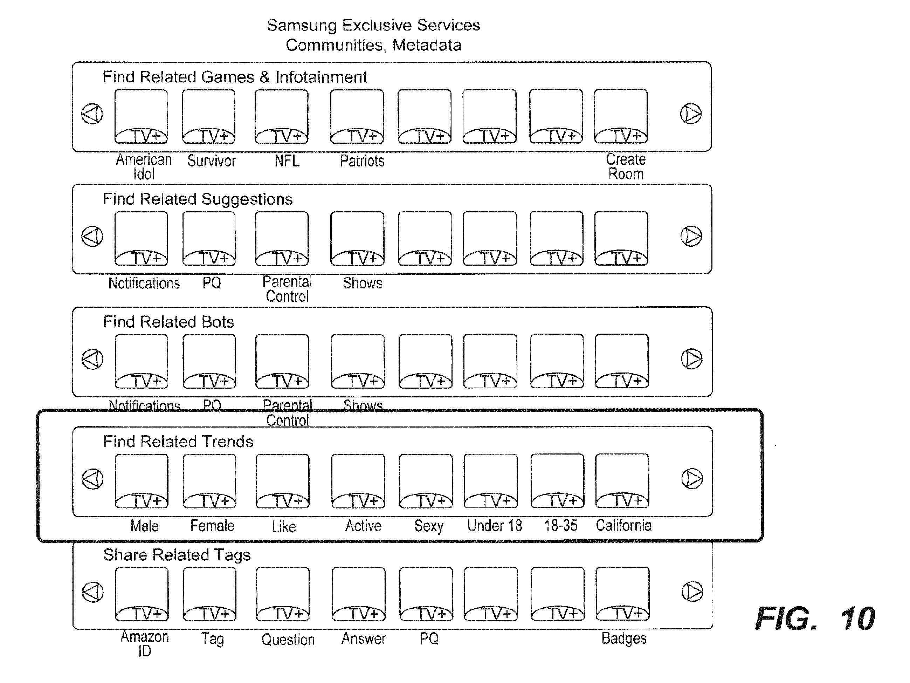

Figure 10 illustrates an example of presenting to the user new trend data feedback regarding a community of viewers. One benefit to consumers of tracking such information and performing data mining is that it provides information that may be used to provide related information, suggestions, trends, and tags. This information may be used in a variety of different ways to provide information, suggestions, or useful advertising to a consumer.

In one embodiment, the more a user relaxes their privacy settings, the more relevant trend information they will receive. As several examples: people "like you" are also exploring item i from widget w; a scene favored by the community is coming up! (other people "liked" this scene); this show is a "local favorite; there are 20K other "couples" watching the show now!; two of your friends purchased item i from widget w; everyone's now tuned to channel c for breaking news; you are the "mayor" of the show c (badges); share/compare your activity diary with others and find similar diaries (e.g., I've watched 20 hours of Netflix™, 5 hours of Grey's Anatomy, spent 20 hours on Youtube, etc.).

In one embodiment, the data structure for trend analysis and user activity takes into consideration context in addition to privacy settings. The collection of user activity data for trend analysis specifies user operation/selection. The framework provides a mechanism to capture/describe the overall context. Also, since multiple users in different settings/regions/preferences "gather around" the same context, the context can be used as a "glue" to generalize user preferences and behaviors for targeting purposes. The same data can be easily anonymized for trend analysis. A module can be provided (e.g., in the shared media device) to ensure that data is anonymized for trend analysis; alternately an anonymizer module in an external service) could be used. The anonymizer module may be configured to anonymize either a set of users or all users. For example, some individuals may want to expose their identity while other users may want to hide it. As one example, some highly influential users in a community may want to expose their identities. Thus, in one implementation the anonymizer module is configured to permit users to opt-in/opt-out of having their data anonymized. A targeting engine that can be local or non-local receives "anonymized" user actions. The targeting engine may, for example, be used to target advertising to the user and also remind the user that the more they expose confidential information the more benefits they receive in terms of suggestions, trend-analysis and receiving discounts and other benefits. Users thus benefit by balancing their privacy with the quality of service they desire to receive.

Targeting of discounts, bargains, and other useful information is a benefit that may be provided to consumers for relaxing their privacy settings. This may include advertisers providing various targeted deals and discounts based on the information that the consumer is willing to provide. As examples: complete a purchase from widget W while watching content C to receive 30% discount; now that your iPad™ is connected, download the ringtone/soundtrack for this show; given that you're interested in xfinity™, purchase the movie trailer you're watching on You Tube™ with 20% discount; download the "grey's anatomy" app for "your iPad™" (30% off) "You might also be interested" in widget w' from the app store.

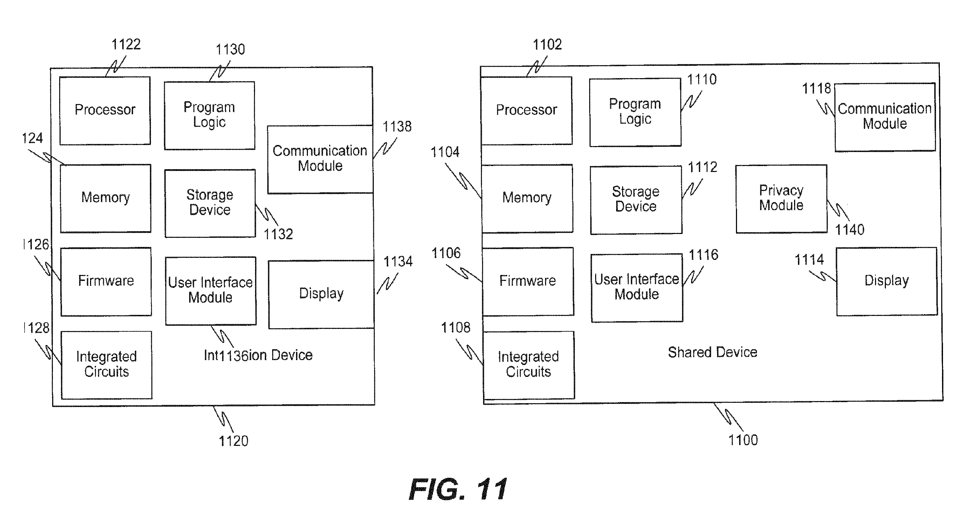

Figure 11 is a block diagram of an interaction device and shared media device. An interaction device 1120 may include a processor 1122, memory 1124, firmware 1126, integrated circuits 1128, program logic 1130, storage device 1132, user interface module 1135, communication module 1138, and display 1134. Communication module 1138 may, for example, be a wireless transceiver. In one embodiment a shared media device is a television that may include a processor 1102, memory 1104, firmware 1106, integrated circuits 1108, program logic 1110, storage device 1112, user interface module 1116, communication module 1118, display 1114. The communication module 1118 may be, for example, a network interface device or a wireless radio transmitter/receiver. Privacy module 1140 may, for example, by implemented as computer program code stored on a storage medium for implementing any of the previously described methods and functions of the shared media device.

Unlike conventional privacy and trend techniques, the present invention permits privacy preserved usage/interest data. By way of comparison, the invention addresses an important privacy concern that is of a particular concern for advanced internet television systems. TVs are communal devices. Conventional TVs mostly skip authentication due to non-user friendly interface, contrary to PCs. Moreover, conventional TVs do not typically allow multi-tasking. Therefore, the content being consumed can be clearly identified by potentially untrusted third parties. Basic TV remote interface and the continuous stream of content allows for very specific and explicit user targeting.

With the ever increasing privacy concerns over internet applications and social networking platforms, bringing these services to TVs will soon create similar (or more pressing) concerns (due to exceptional characteristics of TV watching that distinguishes it from interacting with more personal devices such as HHP (hand held product) and PCs). This invention gives benefits to various parties.

The various aspects, features, embodiments or implementations of the invention described above can be used alone or in various combinations. The many features and advantages of the present invention are apparent from the written description and, thus, it is intended by the appended claims to cover all such features and advantages of the invention. Further, since numerous modifications and changes will readily occur to those skilled in the art, the invention should not be limited to the exact construction and operation as illustrated and described. Hence, all suitable modifications and equivalents may be resorted to as falling within the scope of the invention.

While the invention is described in conjunction with these specific embodiments, it will be understood that it is not intended to limit the invention to the described embodiments. On the contrary, it is intended to cover alternatives, modifications, and equivalents as may be included within the scope of the invention as defined by the appended claims. In the description, specific details are set forth in order to provide a thorough understanding of the present invention. The present invention may be practiced without some or all of these specific details. In addition, well known features may not have been described in detail to avoid unnecessarily obscuring the invention.

The term "computer readable medium" is used generally to refer to media such as main memory, secondary memory, removable storage, hard disks, flash memory, disk drive memory, CD-ROM and other forms of persistent memory. It should be noted that program storage devices, as may be used to describe storage devices containing executable computer code for operating various methods of the present invention, shall not be construed to cover transitory subject matter, such as carrier waves or signals. Program storage devices and computer readable medium are terms used generally to refer to media such as main memory, secondary memory, removable storage disks, hard disk drives, and other tangible storage devices or components.

In accordance with the present invention, the components, process steps, and/or data structures may be implemented using various types of operating systems, programming languages, computing platforms, computer programs, and/or general purpose machines. In addition, those of ordinary skill in the art will recognize that devices of a less general purpose nature, such as hardwired devices, field programmable gate arrays (FPGAs), application specific integrated circuits (ASICs), or the like, may also be used without departing from the scope of the inventive concepts disclosed herein. The present invention may also be tangibly embodied as a set of computer instructions stored on a computer readable medium, such as a memory device.

## Claims

1. A television system, comprising:
a shared media device for playing media including television content, the shared media device also configured to interact with one or more web-based applications;
the shared media device having privacy settings controlled by a privacy engine, the privacy engine configured to receive inputs from the media device to adjust privacy settings to regulate the level of detail of confidential information available to the one or more web-based applications in communication with the media device.

2. The television system of claim 1, wherein the privacy engine resides locally within the privacy-aware television system.

3. The television system of claim 1, wherein the privacy engine resides at least in part on a cloud server.

4. The television system of claim 1, wherein the privacy engine regulates the level of detail of a plurality of different types of confidential information, with the level of detail configured to be independently set for each type of confidential information in at least two different levels including a public level and a private level.

5. The television system of claim 4, wherein the privacy engine regulates the level of detail of at least one of Internet usage, television usage, interactivity with interaction devices, and credentials.

6. The television system of claim 1, further comprising:
the shared media device configured to interact with interaction devices, where each interaction device includes a user interface, a processor, a display, and one or more micro-apps located on either the shared device or each of the plurality of interaction devices to query one or more micro-app partners for auxiliary content for media playing on the shared device;
the privacy engine regulating at least one level of detail of privacy settings associated with the use of the at least one interaction device for at least one of the users involved in an interaction.

7. The television system of claim 6, wherein the privacy engine regulates the level of detail associated with use of at least one micro-app.

8. The television system of claim 6, wherein the privacy engine hosts a privacy manifesto for each user of an interaction device in communication with the shared media device, the privacy engine regulating privacy settings for each interaction device based on the preferences of each respective user.

9. The television system of claim 1, further comprising a trend presentation module, wherein the media device provides trend information based in part on the degree to which the user selects privacy settings making available finer levels of detail of personal information.

10. The television system of claim 1, wherein the shared media device includes at least one full application configured to display full-app content on the display;
a plurality of micro-apps configured to run simultaneously with the full-app content being displayed on the display, determine additional context information for the full-app content; and
augment the full-app content with the additional context information.

11. A method, comprising:
receiving a privacy manifesto from a user of a television system, the privacy manifesto specifying the level of detail of at least one type of confidential information available to one or more web-based applications in communication with the television system; and
protecting, in the television system, the privacy of user information available to the one or more web-based applications based on the privacy manifesto.

12. The method of claim 11, wherein the privacy manifesto regulates the level of detail of a plurality of different types of confidential information, with the level of detail configured to be independently set for each type of confidential information in at least two different levels including a public level and a private level.

13. The method of claim 11, wherein the privacy manifesto specifies the level of detail of at least one of Internet usage, television usage, interactivity with interaction devices, and credentials.

14. The method of claim 11, wherein a plurality of privacy manifestos are received from a plurality of users of the television system via interaction devices and privacy is protected for each user based on their respective privacy manifestos.

15. The method of claim 11, further comprising presenting trend information based in part on the degree to which the user selects privacy settings making available finer levels of detail of personal information.
